# EUROPEAN PATENT SPECIFICATION

(11) **EP 2 951 653 B1**
(45) Date of publication and mention of the grant of the patent: **13.11.2019**
(21) Application number: 14701954.1
(22) Date of filing: 22.01.2014
(51) Int. Cl.: G05B 23/02, G01M 99/00, G06Q 10/00

(54) **A METHOD FOR PROVIDING MAINTENANCE DATA**
VERFAHREN ZUR BEREITSTELLUNG VON WARTUNGSDATEN
PROCÉDÉ PERMETTANT DE FOURNIR DES DONNÉES DE MAINTENANCE

(30) Priority: 01.02.2013 SE 1350124
(43) Date of publication of application: 09.12.2015
(73) Proprietor: Tetra Laval Holdings & Finance S.A., 1009 Pully (CH)
(72) Inventor: SVENSSON, Rickard, S-226 39 Lund (SE); LÖFBERG, Anders, S-275 94 Sjöbo (SE)
(74) Representative: Tetra Pak - Patent Attorneys SE
(86) International application number: PCT/EP2014/051213
(87) International publication number: WO 2014/118049

(56) References cited:
- WO-A1-02/18879
- ZANDER A ET AL: "COMSY - DAS SOFTWARE-PRODUKT FUER EIN EFFIZIENTES LEBENSDAUER- UND INSPEKTIONSMANAGEMENT//COMSY - A SOFTWARE TOOL FOR AN EFFICIENT PLANT LIFE- AND INSPECTION MANAGEMENT", VGB POWERTECH, VGB POWERTECH, ESSEN, DE, vol. 85, no. 9, 1 January 2005 (2005-01-01), pages 126-131, XP001235151, ISSN: 1435-3199

## Description

### TECHNICAL FIELD

The present invention relates to a method for identifying machine parts for maintenance. More particularly, the present invention relates to a method for determining specific components of a liquid processing machine being subject to maintenance, and at which time. Further, the present invention relates to a liquid processing machine implementing such method.

### BACKGROUND

Liquid processing, such as liquid food processing, often requires large systems including many different components or machine parts. Each machine part has a well defined purpose for the specific process to be performed by the system. In this context, a machine part may be a small component such as a valve, pipe, or motor. However, larger and more complex machine parts such as heat exchangers, tanks, homogenizers, etc. also form part of the entire processing system.

Each type of machine part may have an associated operation life time curve representing the probability of failure as a function of operation time. The life time curve may vary between different kinds of machine parts. For example, an electric component may have a constant probability of failure, while a mechanical component, such as a valve with sealing gaskets, may have a Gaussian-shaped life time curve located at a specific operation time interval. Hence, in view of such available life time curves it may be possible to schedule maintenance in advance.

When operating a large scale liquid processing system the system operator may choose different flow paths of the liquid to be processed. Particularly, within food processing a system owner may utilize his system for many different products. For example, the system may be configured for milk processing, thus requiring a specific selection of machine parts and flow paths for the milk to be processed. While selecting the necessary machine parts for the desired purpose it normally also leaves a number of redundant machine parts unused. After a successful treatment of milk, the system owner may want to change to e.g. juice processing. Since juice requires a different treatment, another selection of necessary machine parts and flow paths is necessary. Hence, machine parts used for the milk processing may not be used for juice processing and vice versa.

The same applies for the cleaning in place (CIP) system normally provided for modern processing systems. The CIP system allows effective cleaning for the processing system without the need for shut down and dismounting, and includes additional machine parts necessary for storing cleaning fluids and for connecting the CIP system to the liquid processing system.

Normally, a system owner redesigns his processing system regularly whereby the actual use of the machine parts may vary. During a year of operation involving different products to be processed, some machine parts are used all the time while others are never used. For each machine part being used it is necessary to perform service and maintenance at regular intervals. Since such intervals are often dependent on the machine part itself as well as to its actual use, it would be advantageous to provide an improved method for identifying a specific machine part being subject to maintenance, as well as the suitable time for such service operation.

Related prior art is reflected by patent document WO02/18879A1. WO02/18879A1 discloses a method and an apparatus for monitoring the degradation of an operating system , predicting its remaining service life of, and planning appropriate maintenance. Diagnostic information on degradation of the operating system is obtained through measurement of one or more performance characteristics by one or more sensors on and/or proximate the operating system. The sensor data may be validated to improve the accuracy and reliability of the service life predictions. The condition or degree of degradation of the operating system is presented to a user by way of one or more calculated, numeric degradation figures that are trended against one or more independent variables using one or more mathematical techniques.

### SUMMARY

It is, therefore, an object of the present invention to overcome or alleviate the above described problems.

The basic idea is to assign a specific machine part with one or several measurement signals representing the current condition of the machine part. The measurement signal(s) may be used together with a predetermined operation life time curve of the particular machine part to correct an estimated future service or maintenance occasion, previously based only upon the operation life time curve.

According to a first aspect a method for providing data related to the operating condition of a machine part of a dairy processing system is provided. The method comprises the steps of selecting at least one machine part of said liquid processing system; calculating an expected remaining usable time based on a predictive life time of said machine part; determining at least one real-time operating condition of said at least one machine part; and providing said expected time for maintenance and said at least one operating condition as data for enabling a decision whether to perform maintenance of said machine part or not.

The expected remaining usable time is also a function of parameters representing the liquid product being processed during the actual operation time for said machine part. For some applications, like liquid food processing, different products provide different wear to the machine parts involved. Different pH, viscosity, presence of particles, etc may have different impact on the machine parts, whereby the expected remaining usable time, i.e. the time for maintenance may be more accurate when taking this into account. The step of providing said expected remaining usable time and said at least one condition may further comprise presenting it to a system operator in order to allow the system operator, such as maintenance staff, to schedule maintenance at a suitable time.

The calculated expected remaining usable time may be a function of a desired risk of failure. Hence, the importance of a specific machine part may thus be used to determine the expected remaining usable time.

The expected remaining usable time may further be a function of the actual operation time for said machine part. This is advantageous for large processing system, of which a specific machine part may only be used for a certain product. Hence, by measuring the actual time the specific machine part has been used the expected remaining usable time may be adjusted accordingly.

The parameters representing the liquid product being processed may be predefined. Hence, the method may have access to stored reference values of the behavior of a specific machine parts used for different kinds of product. The expected remaining usable time may thus be estimated more accurately.

In another embodiment, the parameters representing the liquid product being processed are measured in real-time. In such case small variations in the processing system may be detected and used for correcting the value representing the expected remaining usable time. Such variations may e.g. include process speed, surrounding temperature, sudden change of additives, etc.

The step of providing said expected remaining usable time and said at least one operating condition may further comprise comparing said at least one operating condition with a predetermined threshold, and providing an indicator representing the relation between the at least one operating condition and the threshold. Hence, a single indicator may be used for alerting the system operator or maintenance staff of the urgency of service.

The at least one real-time operating condition may be a value representing a flow, a temperature, a pressure, a filling level, a rotational speed, electrical current or voltage, energy consumption, cycle time, vibration, sound, or oil level or pressure. However, other process parameters may also be used. In an embodiment, the process parameters used for determining the actual operating condition are measured by automation control sensors, i.e. sensors already provided in the processing system. In such case, the method does not require additional mounting and connecting of additional sensors. In another embodiment however, e.g. in case where specific machine parts not monitored for automation control, specific machine parts are subject to additional condition monitoring sensors.

According to a second aspect, a method for administrating maintenance of a plurality of machine parts included in a liquid processing system is provided. The method comprises the steps of: performing the method according to the first aspect for each of said plurality of machine parts; comparing the expected remaining usable time and/or said at least one operating condition for each machine parts; determining intervals for the expected remaining usable times and/or said operating conditions; and assigning each machine part to one of said intervals for enabling a decision whether to perform maintenance of said machine parts assigned to a specific interval or not.

According to a third aspect, a liquid processing system is provided. The system comprises a plurality of machine parts, and a controller connected to a computer-readable medium having embodied thereon a computer program for processing by a computer, the computer program comprising a code segment for performing the method according to any one of the preceding claims.

### BRIEF DESCRIPTION OF DRAWINGS

The above, as well as additional objects, features, and advantages of the present invention, will be better understood through the following illustrative and non-limiting detailed description of preferred embodiments of the present invention, with reference to the appended drawings, wherein:
Fig. 1 is a process scheme for a food processing system utilizing a method according to an embodiment;
Fig. 2 is a process scheme for a food processing system utilizing a method according to a further embodiment;
Fig. 3 is a flow chart describing a method according to an embodiment;
Fig. 4a-d show different life time curves for different machine parts;
Fig. 5 shows a method according to an embodiment;
Fig. 6 shows a diagram of a machine part condition vs time; and
Fig. 7 shows an example of a graphical user interface used with a method according to an embodiment.

### DETAILED DESCRIPTION

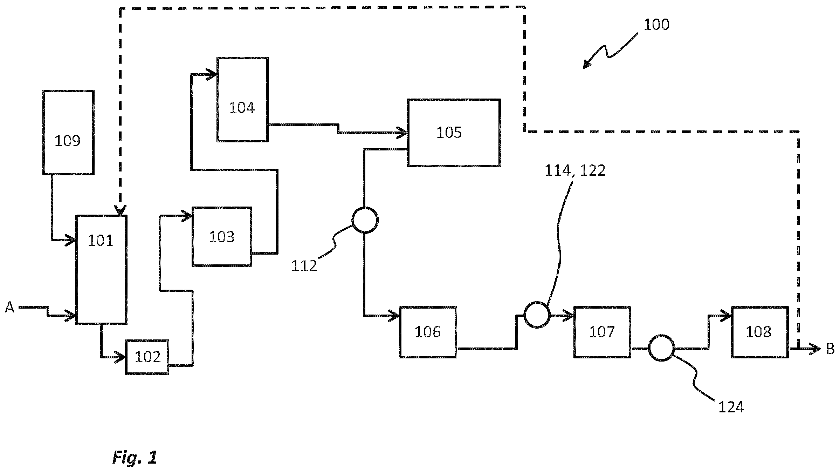

Starting with Fig. 1, a process scheme describing an indirect UHT (ultra heat treatment) process path 100 of a liquid food processing system, such as a dairy, is shown. The process path 100 includes a number of sections each contributing to the treatment of milk and further includes a CIP circuit for cleaning the process system 100.

The process path 100 may form a part of a much bigger and far more complex liquid processing system including additional sections and machine parts for performing different treatment and transportation of the liquid product, such as homogenizers, separators, holding cells or tanks, cooling equipment, pumps, valves, etc. However, all these machine parts are bypassed when the UHT treatment process path of Fig. 1 is chosen by the system operator.

The milk to be treated is introduced at the left end of the figure, indicated by the reference "A". The milk enters a balance tank 101 and is fed by means of a feed pump 102 to a preheater 103. The heated milk is thereafter transported to a deaerator 104 and a subsequently arranged homogenizer 105. Thereafter the milk passes through a first heater 106 and a second heater 107, whereafter the heated milk is cooled by a cooler 108 before it exits the processing system at the right end of the figure, indicated by reference "B". A feeding tank 109 for cleaning detergents used for CIP is further connected to the balancing tank 101.

The first heater 106 is designed to heat the milk product from approximately 70° to 95°C, wherein the second heater 107 is designed to heat the milk product from 95° to above 137°C. The choice of heating temperatures is dependent on the particular liquid product processing system, and may be adjusted according to the desired treatment of the liquid product. Hence, the above-mentioned temperatures are only examples of one such system.

Additional machine parts are provided for automatic process control. In a preferred embodiment two different pressure sensors 112, 114 are arranged upstream and downstream of the first heater 106. The pressure sensors 112, 114 may provide continuous measurements of the pressure difference over the first heater 106 during fouling build-up although their main functionality is to be activated upon CIP initiation for continuous monitoring of the cleaning process.

Correspondingly the second heater 107 is as well provided with two pressure sensors 122, 124 arranged upstream and downstream, respectively, of the second heater 107. Since the second heater 107 is arranged directly after the first heater 106 the first sensor 122 of the second heater 107 may be the same as the second sensor 114 of the first heater 106. However the sensors 122, 114 may also be provided as two separate sensors.

The pressure differences across the heaters 106, 107 are determined as a difference between the second sensor 114, 124 and the first sensor 112, 122 of each heater 106, 107. Alternatively, a pressure differential sensor may also be used for the same purpose.

The pressure sensors 112, 114, 122, 124 represent an example of process control sensors, as a sudden pressure drop may indicate a decreased performance of the system requiring a change in operation parameters. Further sensors used for process control may include rotational speed sensors for electrical pumps, flow meters, level indicators in tanks, temperature sensors, etc. Additionally, preferred process control parameters may include energy consumption and cycle time. Energy consumption may e.g. measured by sensors arranged to monitor steam usage, power usage, etc. Cycle time may e.g. be measured by sensors arranged to detect and monitor pulses, frequencies, etc.

For example, the balance tank 101 may be equipped with a level indicator and a temperature sensor. The feed pump 102 may have a flow meter, a rotational speed sensor, a pressure sensor, etc for providing process control of the pump. The preheater 103 may have temperature sensors, flow meters, and pressure sensors etc for providing operating characteristics for automatic process control. In a similar manner, the machine parts 104, 105, 106, 107, 108, 109 may as well have associated meters and/or sensors.

All such sensors and meters assigned to specific machine parts and/or sections of the liquid processing system provide a vast amount of signals which are commonly used for an efficient automation control. By continuous monitoring of these signals the quality of the liquid product being processed may be controlled and even improved.

Further sensors may also be provided for improving the process monitoring. These sensors, not always necessary for process control, may e.g. include vibration sensors, temperature sensors, hydraulic sensors for monitoring oil levels and pressures, acoustic sensors, ultrasonic sensors, as well as combined sensors for determining the overall performance of the flow path 100.

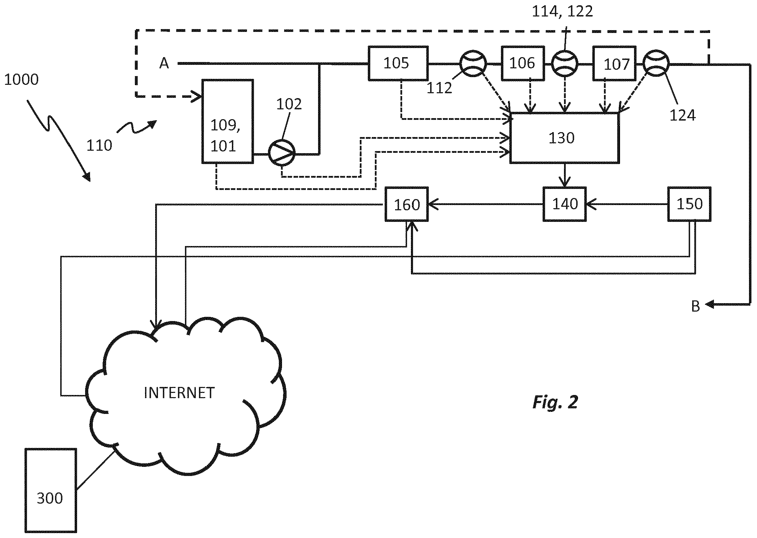

Now referring to Fig. 2, another flow path 1000 of a liquid food processing system is shown. The flow path 1000 may be provided together with the flow path 100 in the same food processing system, or it may be seen as a representation of another flow path of a different liquid processing system. The flow path system 1000 receives liquid product, such as food, to be treated at the inlet "A", and includes a CIP circuit 110. The treated food product exits the food processing system 1000 at "B".

The CIP inlet tank 109 is arranged to provide cleaning liquid via a feeding pump 102. Cleaning liquid is thus fed through the various food processing equipment 105, such as a homogenizer, valves, tanks, or any other food processing equipment, before entering the heaters 106, and 107 respectively. The pressure sensors 112, 114, 122, 124, together with additional process control sensors of the machine parts (i.e. temperature sensors, flow meters, etc.) transmit real-time data to a determining unit 130 which determines the actual operating conditions of the different machine parts 101, 102, 105, 106, 107, 109, i.e. also including machine parts for CIP.

The determined operating conditions for each machine part are further transmitted to a calculator 140, in which the determined operating conditions are compared with corresponding reference values fetched from a reference memory 150 in order to calculate a ratio between actual operating condition and the reference operating condition. Preferably, the reference values correspond to operating conditions of clean and undamaged machine parts, and may be a measured value or a theoretical value. For example, a reference value may be a theoretical value being modified dependent on the current operating status of the flow path 1000, such as the process speed as well as which product is being processed. Further, the reference value may change over time, such that the reference value is updated according to different operation parameters of the food processing system, such as e.g. running time, change of liquid food product, etc. Preferably, a table of reference values are stored in a database of the reference memory 150. The calculator may be provided remotely of the liquid processing system.

The calculated operating condition ratio is thereafter transmitted to a controller 160, which controller 160 is programmed to perform various operations. For example, the controller 160 is configured to also fetch a predictive time for maintenance of each machine part, as well as to provide data corresponding to the predictive time for maintenance and the operating condition ratio for enabling a decision whether to perform maintenance or not.

The predictive time for maintenance may be fetched from the memory 150 or from a remote server 300 accessed via internet. The controller may further be configured to calculate the predictive time for maintenance, i.e. a value representing the remaining usable life time of a specific machine part, from a predetermined value and a predefined desired risk of failure of each machine part. Moreover, the controller 160 may also be configured to calculate the predictive time for maintenance from the predetermined value and from a value representing the actual operating time for the specific machine part, and/or different parameters representing the liquid product being processed during the actual operation time.

Further, the controller 160 is preferably connected to a graphical user interface accessed by a system operator or service provider locally or remotely, e.g. via internet, whereby the predictive time for maintenance as well as the current conditions of the machine parts is presented to the system operator.

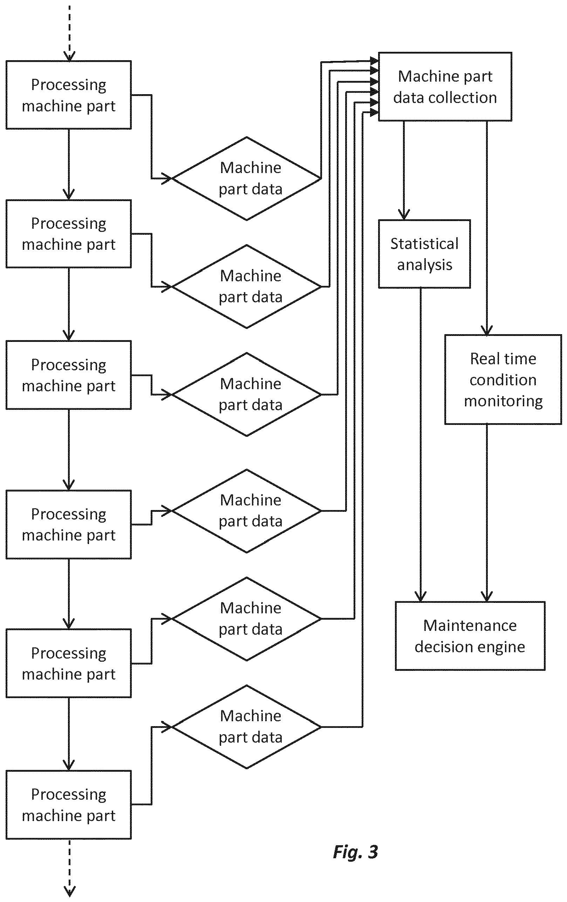

A method according to an embodiment is generally illustrated in Fig. 3. Here, a liquid processing line, or part of a liquid processing line, is illustrated by a sequence of machine parts. Liquid products enter from above and exit at the lower end of the figure. The machine parts are associated with specific meters or sensors capable of transmitting machine part data to a machine part collector, such as the determining unit 130, the calculator 140, the reference memory 150, as well as the controller 160 as described above. Some of the data is thereafter provided for statistical analysis representing a predictive time for maintenance, while some (or parts of the same) data is used for providing a real time monitoring of the actual condition of the machine parts. The output is then used to enable a decision whether to perform maintenance or not.

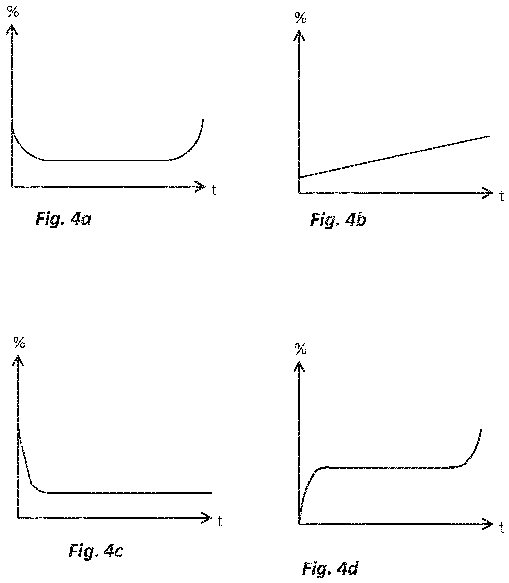

As already mentioned above, each machine part of the processing system may have a predetermined statistical life time curve, representing the risk of failure as a function of time. These curves may be very different depending on the particular machine part. In Fig. 4a, one example of a life time curve is shown. As can be seen, the risk of failure is initially high, wherafter the risk of failure is constant over time until an estimated maximum of the operating life time is approaching. At this point, the risk of failure rapidly increases.

In Fig. 4b, another life time curve for a different machine part is shown. The risk of failure is constantly increasing for this kind of machine part once it is installed in the flow path.

In Fig. 4c a yet further example of a life time curve for a specific machine part is shown. Here, the risk of failure is decreasing rapidly during the initial time of operation, whereafter the risk of failure is constant.

In Fig. 4d another life time curve is shown. The risk for failure is increasing rapidly during the initial operation, wherafter it is constant over a specific time. However, after a certain time, the risk, or probability of failure continuously increases over time.

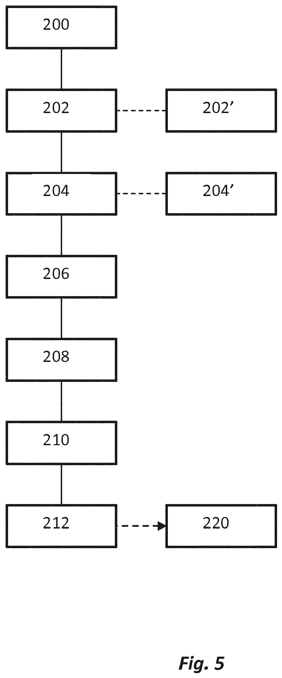

Now referring to Fig. 5, a method according to an embodiment will be described. In a first step 200 the method selects a machine part of a liquid processing system, such as a liquid food processing system, to be evaluated regarding maintenance. The machine part may be any part of the system, such as a valve, a valve system, a motor, a heater, a tank, a separator, a homogenizer, etc, or any combination of such parts.

In step 202 the method fetches predictive life time data corresponding to the particular machine part. The predictive life time data may preferably be data corresponding to the risk of failure as a function of operating time. This particular step 202 may be performed in many different ways. For example, the predictive life time data may be determined by retrieving a predetermined statistical life time curve for the specific machine part, as well as the actual operating time of the machine part, and determining a predictive amount of time left to maintenance. However, such method step may be improved by assigning a desired risk to the machine part. For successful processing some parts may never run to failure. For ensuring continuous operation the system operator may thus order service or maintenance if the risk of failure increases within a time period, e.g. such as by 10% over the next production time interval. Hence, the predictive life time data is adjusted accordingly. For another machine part it may be desired to reduce the costs for maintenance whereby it is decided to perform service when the risk of failure exceeds 90% over the next production time period. Accordingly, the predictive life time data may vary significantly between different machine parts.

Step 202 may further be associated with an optional step 202', in which the predictive life time data is calculated as a function of previous data as well as current system parameters. Should no predefined risk of failure curve exist, system operation history may be used to calculate a predictive risk of failure for a specific machine part. Moreover, the risk of failure curve may further be adjusted in accordance with the actual product being processed, as different liquids or operating parameters may affect the durability of the specific machine part. High speed, acidic products, or particular products may for example affect the durability negatively and hence also affect the associated risk of failure curve. A less frequent cleaning may also have impact, why the risk of failure is changed. Preferably, the step 202' is performed by retrieving machine part information from not only the current processing system, but also for other processing systems having a similar machine part installed and used. Hence, it may be possible to have a large database of machine part information for improving the correctness of the predictive life time data.

In step 204, the predictive life time data is used to calculate an expected remaining usable life time depending on various parameters such as actual operating time, type of liquid product being processed, etc. From step 202, and optionally step 202', the predictive life time data is fetched. Using this data, as well as the actual operating time so far for the specific machine part, it is possible to decide on an expected life time left. However, as other parameters may affect the risk of failure, an optional step 204' may be performed for adjusting the expected remaining usable life time of the specific machine part. In 204', parameters like the current product being processed, previous products being processed, as well as future products intended to be processed may form important input for adjusting the expected life time. Moreover, step 204' may also be performed by assigning the importance of the machine part, i.e. at which risk of failure the machine part should be subject to maintenance, service, or replacement. As an example, the machine part should be subject to maintenance in 1000 hours if the risk of failure should not exceed 10%, taking into account the current product being processed and history data of similar machine parts. Should the processing system be scheduled to change the type of product being processed after 500 hours, leaving the machine part in question bypassed, the expected remaining usable life time may thus be extended with the corresponding processing time of the subsequent product.

Further to this, in step 206, the method fetches information of certain conditions of the machine part. In case of a high pressure pump, e.g. a homogenizer, such information may e.g. include flow variations, pressure drops, vibrations, etc. Preferably, the information is retrieved from an automation control program associated with the processing system. Hence, it is not necessary to provide unique sensors only for this purpose, but readily available signals already available may be used. However, it may also be possible to retrieve the actual condition from sensors or meters arranged only for this particular purpose, i.e. to provide information on specific machine parts. A machine part may have a single associated condition, a plurality of associated conditions, or several machine parts may share a single or several conditions. As an example, a valve, a pump, and a dynamic mixer may be arranged in close proximity of a vibration sensor. Hence, the vibration sensor may provide a condition for these three machine parts. Further, a pressure sensor may be provided downstream of the valve and the pump, but upstream of the mixer. Hence, the pressure sensor provides a condition for the valve and the pump. Having only two measurable conditions for three different machine parts, these two conditions may nevertheless be subject to a suitable algorithm for determining a unique condition for each one of the three machine parts. Only as an example, the pressure sensed by the pressure sensor may be very relevant for the pump condition, while the derivative of the pressure may be very relevant for the valve condition. Even further, control signals to the pump may further be used in combination with the measured pressure for determining actual conditions.

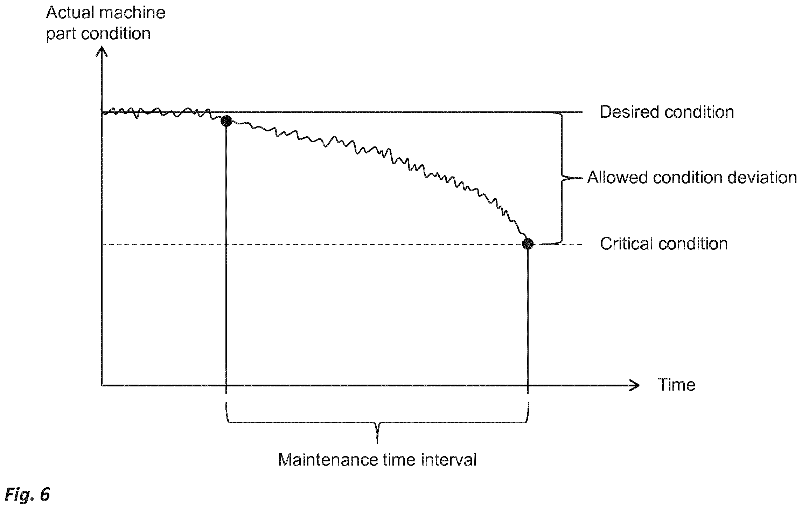

In 208 the condition information is compared to predetermined reference values corresponding to the condition of a new machine part. Hence, the output from step 208 may be a ratio between the actual condition and the reference condition. With reference to Fig. 6, an example of the condition of a specific machine part is shown as a function of time. Initially, the condition (like e.g. power consumption, temperature, pressure, etc) is equal to a desired condition, preferably equal to or similar to the condition of a brand new or unused machine part. At a specific time, the condition of the machine part is decreasing and continues to decrease until a critical level is reached. The critical level may be set by an operator, a machine owner, or the service provider to represent the condition of failure, or any other value representing a critical performance of the machine part. Returning to Fig. 5, the predetermined reference value may thus correspond to the desired condition illustrated in Fig. 6.

In step 210 a comparison is performed wherein the condition information of step 208 is evaluated for determining the impact of the ratio relative a future maintenance task. Hence, step 210 may output an indication if the condition is in the range of normal operation or not. For example, if the actual condition (see e.g. Fig. 5 when the time is close to zero) is very close to the desired condition, this is an indication of a properly working machine part. On the other hand, if the condition information is indicating a malfunction of the machine part, the impact relating to future maintenance is increased.

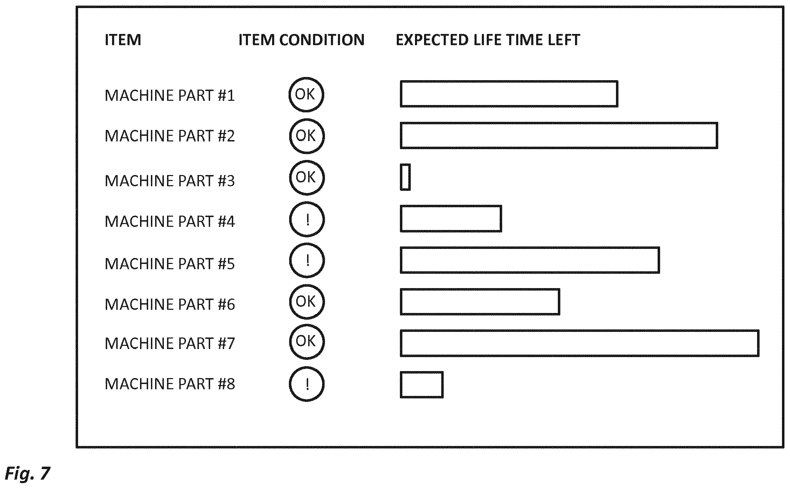

In a final step 212 the method provides the information of the expected remaining usable life time, i.e. a predicted occasion for next maintenance, service, or replacement, as well as the actual condition. Based on this information or data, a system operator may decide on when to perform the maintenance task. As will be further described with reference to Fig. 7, the expected remaining usable life time and the actual condition are preferably displayed as separate values. However, these may of course also be combined into a common value for indicating the need and time for future maintenance.

The method may further be improved by an optional step 220. Step 220 is provided for administrating maintenance of a plurality of machine parts included in a liquid processing system and includes retrieving the expected remaining usable life time as well the actual condition for a number of machine parts, preferably for all machine parts associated with the current processing system. Further to this, step 220 includes comparing the expected remaining usable life time and/or said at least one operating condition for each machine parts in order to determine specific time intervals for the predicted times for maintenance and/or said actual conditions. The time intervals may either be defined by actual times, i.e. expressed in hours or days or similar, or by a relative scale. The relative scale may e.g. include a small number of categories, such as i) urgent, ii) needs to be scheduled, iii) awaiting, and iv) no action needed. Of course, some of these categories may be omitted or renamed, as well as it is possible to add more for a more refined and complex grouping. Once the time intervals are defined, each one the machine parts may be associated to a specific category or actual time interval such that each interval is associated with a large number of machine parts. Hence, step 220 allows an operator to easily access information of the machine parts associated with a specific interval for facilitating planning and execution of maintenance or service.

Now turning to Fig. 7, an example of a graphical user interface presenting information provided by the method 200 is shown. The graphical user interface may e.g. be provided on a computer screen or similar to present information to an operator or a service provider. In this example, the user interface includes three columns, wherein the first one to the right in the figure includes a list of a number of machine parts. The list may be filtered such that the machine parts are related to each other. As an example the list of machine parts may only show machine parts associated with a common section of the process path of the processing system. As a further example, the list may only show machine parts of a specific type, however provided at different positions in the process path.

The user interface is preferably allowing a user, such as a plant operator or service provider, to arrange different machine parts in different groups. The main purpose of this functionality is to allow the operator to schedule the maintenance tasks in an optimal manner for minimizing the need for complete production stop. Such scheduling may e.g. be performed by defining a number of machine parts which are suitable to monitor as a group as well as being suitable for common maintenance. As an example, the operator may want to group all machine parts requiring a common service competence. As a further example, the operator may want to group all machine parts which are suitable to disconnect at the same time. Hence, a specific machine part may be associated with one or more groups. Taking a valve as an example, such machine part may e.g. be associated with a first group including all machine parts of a sterilizing unit, as well as with a second group including all valves of that particular type.

For every machine part displayed in the list, two parameters are also shown. The first one is an indication of the current condition. The current condition may be visualized in a number of ways, like in the present example by any one of two different symbols. The first symbol is an indication that the condition is equal to or close to the desired condition (represented by "OK"), while the other symbol (represented by "!") is an indication that the condition is equal to or close to a critical condition. The current condition may also be visualized by a filled symbol, wherein the color of the symbol represents the actual condition. E.g., a green symbol may indicate a machine part working properly, a yellow symbol may indicate a machine part with a condition approaching a critical level, while a red symbol may indicate a machine part already operating at a critical condition.

The last column includes information regarding the expected remaining usable life time for each machine part. The expected remaining usable life time is not correlated to the actual condition, but representing the output from step 204 in the method 200 described with reference to Fig. 5. A meter bar, representing time, is provided for presenting the information. Preferably, the meter bar may have different colors depending on the actual length for further improving the ability to interpret the information.

The item list, i.e. the list of the machine parts presented in the user interface, may be easily exchanged for adding, removing, or changing the machine part selection. Further to this, the graphical user interface may also allow a filter based on specific time intervals as described above with reference to step 220 of the method 200.

When a system operator or the maintenance personnel grants access to the user interface, it is very easy to obtain information about which machine parts that should be subject to maintenance and at which time. For example, the expected remaining usable life time presented for a specific machine part may indicate urgent maintenance. However, should the item condition column indicate that the machine part is working properly, the staff may decide to postpone action. In a similar manner the expected remaining usable life time may show no need for service, while the item condition indicates malfunction. Hence, the staff is alerted in a very efficient manner such that running downtime is limited or even avoided.

Even if the actual condition and the expected remaining usable life time are displayed as two separate parameters, the user interface may also include an algorithm wherein these two parameters are compared and processed to form a single indicator for the need for maintenance. In a further embodiment, the expected remaining usable life time indicator may be automatically extended if the actual condition is indicating that the machine part is working properly. Similarly, the expected remaining usable life time may be automatically shortened if the actual condition is indicating that the machine part is not working properly.

The method and system described above makes it possible for a processing plant owner to improve the maintenance process in a very convenient manner. By determining the expected remaining usable life time for a specific machine part, by using history data and actual process parameters, as well as determining the actual condition for the same machine part, maintenance may be planned and scheduled in a much improved way compared to what has previous been known.

Previous systems for maintenance scheduling is normally providing information regarding different service tasks. Typically, a service task may either be a service check, such as manual (or automatic) monitoring and analysis of the particular machine part, or a service action, such as replacement or other physical action. A service action may also include oil refilling, filter exchange, etc. Hence, a machine part may typically be associated with regular and predetermined service checks prior to a service action.

By refining the system in accordance with the present embodiments, such prescheduled service checks may be completely avoided. By providing a method where an expected remaining usable life time is calculated, together with real time machine part condition monitoring, it is no longer necessary to actually enter the processing system and do manual checks. Instead, the real time condition monitoring will allow the system operator or the service provider to perform operator driven checks only when it is required, i.e. when the machine part condition is alerting such task. Further, the method allows a machine part supplier to access the condition data to perform more detailed analysis of the current condition, thus assisting the system operator or service provider to decide on the necessary maintenance tasks.

Although the above description has been made mostly with reference to a liquid food processing system, it should be readily understood that the general principle of the method of identifying machine parts for maintenance is applicable for various different processing systems.

## Claims

1. A method for providing data related to the operating condition of a machine part (106, 109) of a dairy processing system (100), comprising the steps of:
selecting at least one machine part (106, 109) of said dairy processing system (100);
calculating an expected remaining usable time based on a predictive life time of said machine part (106, 109);
determining at least one real-time operating condition of said at least one machine part (106, 109); and
providing said expected remaining usable time and said at least one operating condition as data for enabling a decision whether to perform maintenance of said machine part (106, 109) or not, **characterized in that**
said expected remaining usable time is a function of parameters representing a liquid product being processed during the actual operation time for said machine part.

2. The method according to claim 1, wherein the step of providing said expected remaining usable time and said at least one condition further comprises presenting it to a system operator.

3. The method according to claim 1 or 2, wherein the calculated expected remaining usable time is a function of a desired risk of failure for said machine part.

4. The method according to any of the preceding claims, wherein said expected remaining usable time is a function of the actual operation time for said machine part.

5. The method according to claim 1, wherein said set of parameters representing the liquid product being processed are predefined.

6. The method according to claim 1, wherein said parameters representing the liquid product being processed are measured in real-time.

7. The method according to any of the preceding claims, wherein the step of providing said expected remaining usable time and said at least one operating condition comprises comparing said at least one operating condition with a predetermined threshold, and providing an indicator representing the relation between the at least one operating condition and the threshold.

8. The method according to any of the preceding claims, wherein said at least one real-time operating condition is a value representing a flow, a temperature, a pressure, a filling level, a rotational speed, electrical current or voltage, energy consumption, cycle time, vibration, sound, or oil level or pressure.

9. A method for administrating maintenance of a plurality of machine parts included in a liquid processing system, comprising the steps of:
performing the method according to any one of the preceding claims for each of said plurality of machine parts;
comparing the expected remaining usable time and/or said at least one operating condition for each machine parts;
determining intervals for the expected remaining usable times and/or said operating conditions; and
assigning each machine part to one of said intervals for enabling a decision whether to perform maintenance of said machine parts assigned to a specific interval or not.

10. A dairy processing system (100) comprising a plurality of machine parts (101, 102, 103, 104, 105, 106, 107, 108, 109), and a controller (160) connected to a computer-readable medium having embodied thereon a computer program for processing by a computer, the computer program comprising a code segment for performing the method according to any one of the preceding claims.

## Patentansprüche

1. Verfahren zum Liefern von Daten bezüglich des Betriebszustands eines Maschinenteils (106, 109) eines Molkereiverarbeitungssystems (100), das die folgenden Schritte umfasst:
Auswählen mindestens eines Maschinenteils (106, 109) des Molkereiverarbeitungssystems (100);
Berechnen einer erwarteten verbleibenden verwendbaren Zeit anhand einer vorhergesagten Lebenszeit des Maschinenteils (106, 109);
Bestimmen mindestens eines Echtzeitbetriebszustands des mindestens einen Maschinenteils (106, 109); und
Liefern der erwarteten verbleibenden verwendbaren Zeit und des mindestens einen Betriebszustands als Daten zum Ermöglichen einer Entscheidung, ob eine Wartung des Maschinenteils (106, 109) auszuführen ist oder nicht, **dadurch gekennzeichnet, dass**
die erwartete verbleibende verwendbare Zeit eine Funktion von Parametern ist, die ein flüssiges Produkt repräsentieren, das während der effektiven Betriebszeit für das Maschinenteil verarbeitet wird.

2. Verfahren nach Anspruch 1, wobei der Schritt des Lieferns der erwarteten verbleibenden verwendbaren Zeit und des mindestens einen Zustands ferner umfasst, sie einem Systembetreiber darzustellen.

3. Verfahren nach Anspruch 1 oder 2, wobei die berechnete erwartete verbleibende verwendbare Zeit eine Funktion eines gewünschten Ausfallrisikos für das Maschinenteil ist.

4. Verfahren nach einem der vorhergehenden Ansprüche, wobei die erwartete verbleibende verwendbare Zeit eine Funktion der effektiven Betriebszeit für das Maschinenteil ist.

5. Verfahren nach Anspruch 1, wobei die Gruppe von Parametern, die das flüssige Produkt repräsentieren, das verarbeitet wird, im Voraus definiert sind.

6. Verfahren nach Anspruch 1, wobei die Parameter, die das flüssige Produkt repräsentieren, das verarbeitet wird, in Echtzeit gemessen werden.

7. Verfahren nach einem der vorhergehenden Ansprüche, wobei der Schritt des Lieferns der erwarteten verbleibenden verwendbaren Zeit und des mindestens einen Betriebszustands umfasst, den mindestens einen Betriebszustand mit einem vorbestimmten Schwellenwert zu vergleichen und einen Indikator zu liefern, der die Beziehung zwischen dem mindestens einen Betriebszustand und dem Schwellenwert repräsentiert.

8. Verfahren nach einem der vorhergehenden Ansprüche, wobei der mindestens eine Echtzeitbetriebszustand ein Wert ist, der einen Strom, eine Temperatur, einen Druck, einen Füllstand, eine Drehzahl, einen elektrischen Strom oder eine elektrische Spannung, einen Energieverbrauch, eine Zykluszeit, eine Schwingung, ein Geräusch oder einen Ölstand oder -druck repräsentiert.

9. Verfahren zum Ausüben einer Wartung mehrerer Maschinenteile, die in einem Flüssigkeitsverarbeitungssystem enthalten sind, das die folgenden Schritte umfasst:
Ausführen des Verfahrens nach einem der vorhergehenden Ansprüche für jeden der mehreren Maschinenteile;
Vergleichen der erwarteten verbleibenden verwendbaren Zeit und/oder des mindestens einen Betriebszustands für jedes Maschinenteil;
Bestimmen von Intervallen für die erwarteten verbleibenden verwendbaren Zeiten und/oder die Betriebszustände; und
Zuweisen jedes Maschineteils zu einem der Intervalle, um eine Entscheidung zu ermöglichen, ob eine Wartung der Maschinenteile, die einem spezifischen Intervall zugewiesen sind, auszuführen ist oder nicht.

10. Molkereiverarbeitungssystem (100), das mehrere Maschinenteile (101, 102, 103, 104, 15, 106, 107, 108, 109) und eine Steuereinheit (160), die mit einem computerlesbaren Medium mit einem auf ihm enthaltenen Computerprogramm zum Verarbeiten durch einen Computer verbunden ist, umfasst, wobei das Computerprogramm ein Codesegment umfasst, um das Verfahren nach einem der vorhergehenden Ansprüche auszuführen.

## Revendications

1. Procédé permettant de fournir des données relatives à un état de fonctionnement d'une pièce (106, 109) de machine d'un système (100) de transformation de produits laitiers, comprenant les étapes de :
sélection d'au moins une pièce (106, 109) de machine dudit système (100) de transformation de produits laitiers ;
calcul d'une durée utile restante attendue sur la base d'une durée de vie anticipée de ladite pièce (106, 109) de machine ;
détermination d'au moins un état de fonctionnement en temps réel de ladite au moins une pièce (106, 109) de machine ; et
fourniture de ladite durée utile restante attendue et dudit au moins un état de fonctionnement sous forme de données permettant la prise d'une décision quant à la nécessité ou non d'effectuer la maintenance de ladite pièce (106, 109) de machine, **caractérisé en ce que**
ladite durée utile restante attendue est une fonction de paramètres représentant un produit liquide en cours de transformation au cours de la durée de fonctionnement effective pour ladite pièce de machine.

2. Procédé selon la revendication 1, dans lequel l'étape de fourniture de ladite durée utile restante attendue et dudit au moins un état comprend en outre leur présentation à un opérateur du système.

3. Procédé selon la revendication 1 ou 2, dans lequel la durée utile restante attendue calculée est une fonction d'un risque de défaillance souhaité pour ladite pièce de machine.

4. Procédé selon l'une quelconque des revendications précédentes, dans lequel ladite durée utile restante attendue est une fonction de la durée de fonctionnement effective pour ladite pièce de machine.

5. Procédé selon la revendication 1, dans lequel ledit jeu de paramètres représentant le produit liquide en cours de transformation est prédéfini.

6. Procédé selon la revendication 1, dans lequel lesdits paramètres représentant le produit liquide en cours de transformation sont mesurés en temps réel.

7. Procédé selon l'une quelconque des revendications précédentes, dans lequel l'étape de fourniture de ladite durée utile restante attendue et dudit au moins un état de fonctionnement comprend la comparaison dudit au moins un état de fonctionnement à un seuil prédéterminé et la fourniture d'un indicateur représentant la relation entre l'au moins un état de fonctionnement et le seuil.

8. Procédé selon l'une quelconque des revendications précédentes, dans lequel ledit au moins un état de fonctionnement est une valeur représentant un débit, une température, une pression, un niveau de remplissage, une vitesse de rotation, un courant ou une tension électrique, une consommation énergétique, une durée de cycle, une vibration, un son ou un niveau ou une pression d'huile.

9. Procédé de gestion de la maintenance d'une pluralité de pièces de machine comprises dans un système de transformation de liquide, comprenant les étapes de :
réalisation du procédé selon l'une quelconque des revendications précédentes pour chacune de ladite pluralité de pièces de machine ;
comparaison de la durée utile restante attendue et/ou dudit au moins un état de fonctionnement pour chaque pièce de machine ;
détermination d'intervalles pour les durées utiles restantes attendues et/ou lesdits états de fonctionnement ; et
assignation de chaque pièce de machine à l'un desdits intervalles permettant la prise d'une décision quant à la nécessité ou non d'effectuer la maintenance desdites pièces de machine assignées à un intervalle spécifique.

10. Système (100) de transformation de produits laitiers, comprenant une pluralité de pièces de machine (101, 102, 103, 104, 105, 106, 107, 108, 109) et une unité de commande (160) reliée à un support lisible par ordinateur incorporant un programme d'ordinateur destiné à être traité par un ordinateur, le programme d'ordinateur comprenant un segment de code permettant de réaliser le procédé selon l'une quelconque des revendications précédentes.
